# EUROPEAN PATENT APPLICATION

(11) **EP 3 246 236 A1**
(43) Date of publication of application: **22.11.2017**
(21) Application number: 16182890.0
(22) Date of filing: 04.08.2016
(51) Int. Cl.: B62K 19/36, B62J 1/08

(54) **BICYCLE SEAT TUBE ASSEMBLY WITH SHOCK-ABSORBING STRUCTURE AND BICYCLE USING THE SAME**

(30) Priority: 20.05.2016 CN 201620466759 U
(71) Applicant: Lin, Chih-Ling, Taipei City 110 (TW)
(72) Inventor: Lin, Chih-Ling, Taipei City 110 (TW)
(74) Representative: Lang, Christian

(57) **Abstract**

A bicycle seat tube assembly (105) with shock-absorbing structure (24) and a bicycle using the same is disclosed. The shock-absorbing structure is freely replaceable in the bicycle seat tube assembly. The shock-absorbing structure is made of elastic polymer. The shock-absorbing structure is replaceably arranged in the bicycle seat tube assembly and attached to the seat post (21) of the bicycle seat tube assembly to reduce shocks transmitted to the bicycle.

## Description

This application claims priority for China patent application no. 201620466759.3 filed on May 20, 2016, the content of which is incorporated by reference in its entirely.

### BACKGROUND OF THE INVENTION

### Field of the Invention

The present invention relates to a bicycle seat tube assembly, particularly to a bicycle seat tube assembly with shock-absorbing structure and a bicycle using the same.

### Description of the Related Art

Nowadays, riding a bicycle has become by far the most popular sport. With the awakening of environmental awareness, many people choose bicycles as their commuting transportation vehicle, so as to save energy and exercise physical and mental training. Besides, with advancement of technology for manufacturing bicycles, bicycle frames trend to lightweight so that the bicycles have flexible control and performance. The early bicycles used bicycle frames made of steel, aluminum, or titanium. In recent years, carbon fiber bicycle frames are developed. Since carbon fiber features lightweight characteristics and good impact-absorbing properties and is capable of being used to manufacture bicycle frames of various shapes, carbon fiber bicycle frames become more and more popular.

Although carbon fiber has good impact-absorbing properties to reduce shocks generated by riding a bicycle, a rider feels shocks from a frame of the bicycle due to rough road surfaces when riding the bicycle to pass through rough roads or bumpy mountain tracks. Besides, it is uncomfortable or tiring for the rider to ride the bicycle to pass through rough roads or bumpy mountain tracks.

In order to reduce shocks generated by riding a bicycle to pass through rough roads, many bicycle products aimed to reduce shocks generated by bicycling have been sold on the market, or related technologies have been published. For example, the US patent No.8,888,115 disclosed a bicycle seat tube assembly and a seat post. The seat tube can be arranged to reduce shocks that are originated at the bicycle wheel and are transmitted to the rider of the bicycle. The seat tube of the patent comprises an open cavity. The open cavity defines a space between an outer wall of the seat post and an inner wall of the seat tube. The bicycle seat tube assembly also comprises a shock damping member. The shock damping member is preferably made of a damping material. The damping material can be a solid piece of elastomeric material and partially or entirely occupy the entire space of the open cavity, thereby reducing shocks transmitted to the rider. The disadvantage of the bicycle shock-absorbing technology of the patent is that the elastomeric shock damping member is not connected with exterior of the seat tube but partially fills the open cavity within the seat tube. When the rider rides through rough roads, shocks transmitted from rough roads are still transmitted to the rider through the rigid seat tube so that the rider feels uncomfortable. As a result, the bicycle seat tube has the bad suspension effect.

In addition, the Taiwan utility patent No. M452908 disclosed a shock-absorbing bicycle frame comprising a tube body. The tube body has an inner tube and an outer tube sleeving at least one part of the inner tube. There is no gap between the inner tube and the outer tube. The inner tube is made of fiber-reinforced thermosetting plastics, and the outer tube is made of fiber-reinforced thermoplastics. However, the disadvantages of the design is that the inner tube is combined with the outer tube through adhesive material such as epoxy resins, other liquid or other solid outer tubes, such that the inner tube is seamlessly connected with the outer tube in a thermal pressing way. When a user feels that the suspension effect of the bicycle is too soft or too stiff and wants to replace the outer tube, the outer tube can be not replaced. In such a case, the user has to replace the entire bicycle frame and pay dearly accordingly.

To overcome the abovementioned problems, the present invention provides a bicycle seat tube assembly with shock-absorbing structure and a bicycle using the same, so as to solve the afore-mentioned problems of the prior art.

### SUMMARY OF THE INVENTION

A primary objective of the present invention is to provide a bicycle seat tube assembly with shock-absorbing structure and a bicycle using the same, which allows a user himself to replace the shock-absorbing structure of the bicycle seat tube assembly whereby the user conveniently adjusts the suspension stiffness of the bicycle.

Another objective of the present invention is to provide a bicycle seat tube assembly with shock-absorbing structure and a bicycle using the same, wherein the shock-absorbing structure is replaceably arranged in the bicycle seat tube assembly and seamlessly attached to a seat post of the bicycle seat tube assembly, whereby the shock-absorbing structure is easily assembled and effectively reduces shocks transmitted to a rider due to rough road surfaces.

To achieve the abovementioned objectives, the present invention provides a bicycle seat tube assembly with shock-absorbing structure, wherein the bicycle seat tube assembly comprises a seat tube, a seat post, a shock-absorbing structure and a seat lug. The seat tube is configured to sleeve an outer wall of the seat post. The shock-absorbing structure is configured to be replaceably arranged in the bicycle seat tube assembly and attached to the seat post to reduce shocks transmitted to a bicycle. The seat lug is configured to accommodate the seat tube.

Preferably, the shock-absorbing structure comprises thermoplastic elastomer (TPE) and is realized with a shock-absorbing pad. The shock-absorbing spacer is a long and flat arcuate body. An upper surface of the shock-absorbing spacer has a flange.

Preferably, the seat tube has a shape of a cylinder. The shock-absorbing structure is seamlessly attached to the seat post. Besides, there is an installation slot arranged between an outer wall of the seat post and a front side surface or a back side surface of an inner wall of the seat tube to accommodate the shock-absorbing structure.

Below, the embodiments are described in detail in cooperation with the drawings to make easily understood the technical contents, characteristics and accomplishments of the present invention.

### BRIEF DESCRIPTION OF THE DRAWINGS

Fig.1 is a diagram schematically showing a bicycle according to an embodiment of the present invention;
Fig.2A is a perspective view of a bicycle seat tube assembly according to a preferred embodiment of the present invention;
Fig.2B is an exploded view of a bicycle seat tube assembly with a seat post thereof having a shape of a cylinder according to a preferred embodiment of the present invention;
Fig.2C is a schematic view showing a seat post of the bicycle seat tube assembly having a shape of an elliptic cylinder or a water drop according to a preferred embodiment of the present invention;
Fig.3 is a diagram schematically showing connection relationship between a shock-absorbing pad and a seat tube according to a preferred embodiment of the present invention;
Fig.4A is a diagram schematically showing the shock-absorbing pad being partially installed in the bicycle seat tube assembly according to a preferred embodiment of the present invention;
Fig.4B is a diagram schematically showing the shock-absorbing pad being completely installed in the bicycle seat tube assembly according to a preferred embodiment of the present invention; and
Fig.5 is a cross-sectional view of a seat post of a bicycle according to a preferred embodiment of the present invention.

### DETAILED DESCRIPTION OF THE INVENTION

The present invention provides a bicycle seat tube assembly with shock-absorbing structure and a bicycle using the same, wherein the bicycle seat tube assembly comprises a shock-absorbing structure being replaceably arranged in the bicycle seat tube assembly. The present invention allows a user to manually replace the shock-absorbing structure. As a result, if the user wants to adjust the stiffness of a suspension system of the bicycle, the user can extract and replace the shock-absorbing structure from the bicycle seat tube assembly by himself/herself.

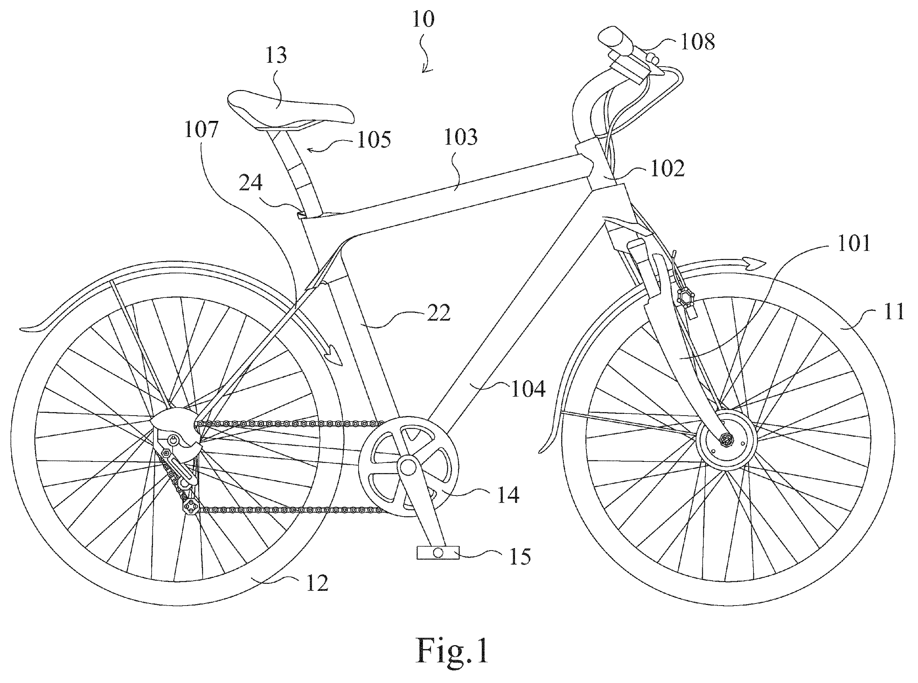

Refer to Fig.1 which is a diagram schematically showing a bicycle according to an embodiment of the present invention. The bicycle of the present invention comprises a bicycle frame 10, a front wheel 11, a rear wheel 12, a saddle 13, a sprocket wheel 14, and a pedal 15. The saddle 13 is arranged on a top of the bicycle frame 10. The bicycle frame 10 comprises a fork 101, a head tube 102, a top tube 103, a down tube 104, a bicycle seat tube assembly 105, a seat stay 107 and a handlebar 108. The top tube 103 extends horizontally and backward from the head tube 102, and the down tube 104 extends downward and backward from the head tube 102. The bicycle seat tube assembly 105 comprises a seat tube 22 connected with rear ends of the up tube 103 and the down tube 104. The seat stay 107 extends backward from an upper section of the seat tube 22 and connects with the rear end of the top tube 103. The fork 101 rotatably penetrates the head tube 102. The handlebar 108 is arranged at a tip of the fork 101, and a tail of the fork 101 is provided with the front wheel 11. A tail of the seat stay 107 is provided with the rear wheel 12. The pedal 15 is arranged on the middle of the bicycle frame 10, and the sprocket wheel 14 is arranged on the seat stay 107. It is noteworthy that the bicycle seat tube assembly 105 comprises a shock-absorbing structure 24 arranged in the bicycle seat tube assembly 105. In a preferred embodiment, the shock-absorbing structure 24 is a shock-absorbing pad which is a long and flat arcuate body. Preferably, the bicycle frame 10 is made of carbon fiber. However, the bicycle frame 10 can be made of other material, such as steel, aluminum or titanium. Below is the detail introduction of the bicycle seat tube assembly 105.

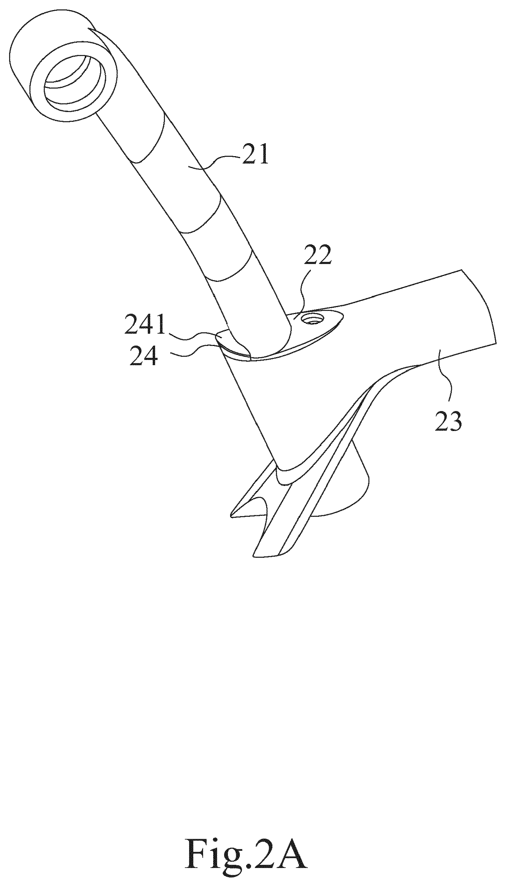

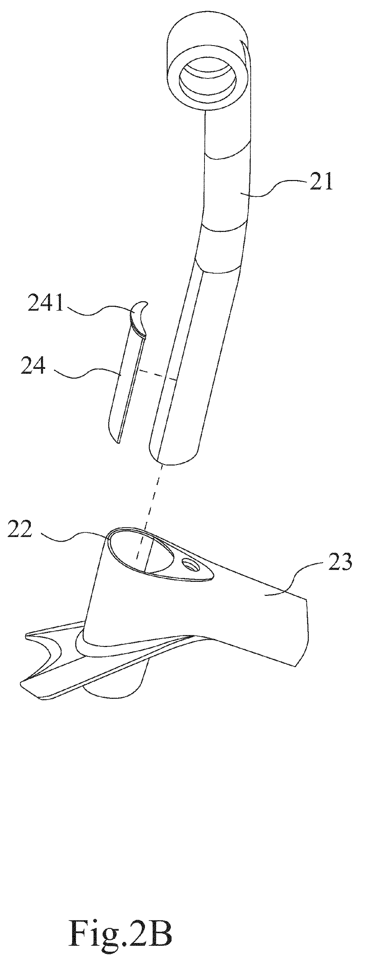

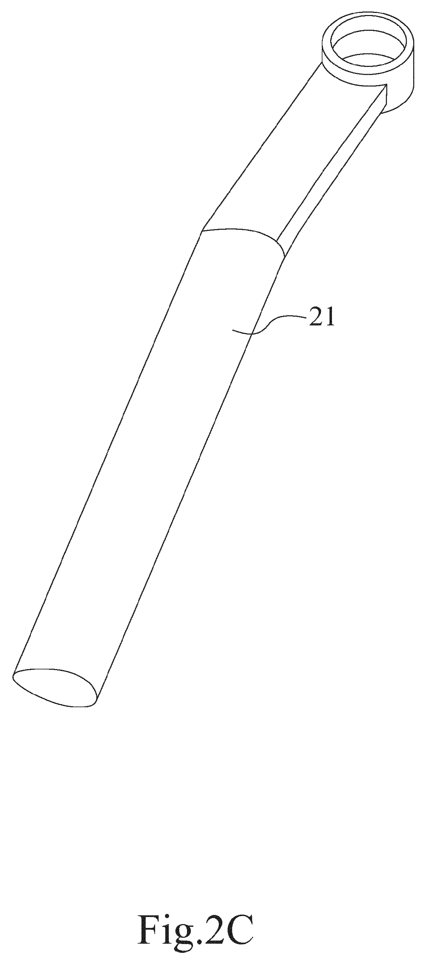

Fig.2A is a perspective view of the bicycle seat tube assembly according to a preferred embodiment of the present invention and Fig.2B is an exploded view of the bicycle seat tube assembly according to a preferred embodiment of the present invention. Refer to Fig.1, Fig.2A and Fig.2B. The bicycle seat tube assembly 105 comprises the seat tube 22, a seat post 21 and a seat lug 23. The seat lug 23 is configured to accommodate the seat tube 22, whereby the seat tube 22, the top tube 103 and the seat stay 107 are connected together. The seat post 21 is connected with the saddle 13. A height of the saddle 13 is adjusted by a quick release rod (not shown) of the seat tube 22. The seat tube 22 sleeves the seat post 21. The seat tube 22 is used to adjust the depth that the seat post 21 is inserted into the seat tube 22, thereby adjusting the height of the saddle 13. Besides, the shock-absorbing pad 24 of the bicycle seat tube assembly 105 is replaceably arranged in the bicycle seat tube assembly 105. In an embodiment of Fig.2B, the seat post 21 has a shape of a cylinder. Alternatively, the seat post 21 also has a shape of an elliptic cylinder (or a water drop). In an embodiment of Fig.2C, the seat post 21 also has a shape of an elliptic cylinder or a water drop. However, the shape of the seat post 21 is adaptable, and the scope of the invention should not be limited to the form disclosed in Fig. 2B and Fig. 2C. Below is the introduction of installation of the shock-absorbing spacer 24.

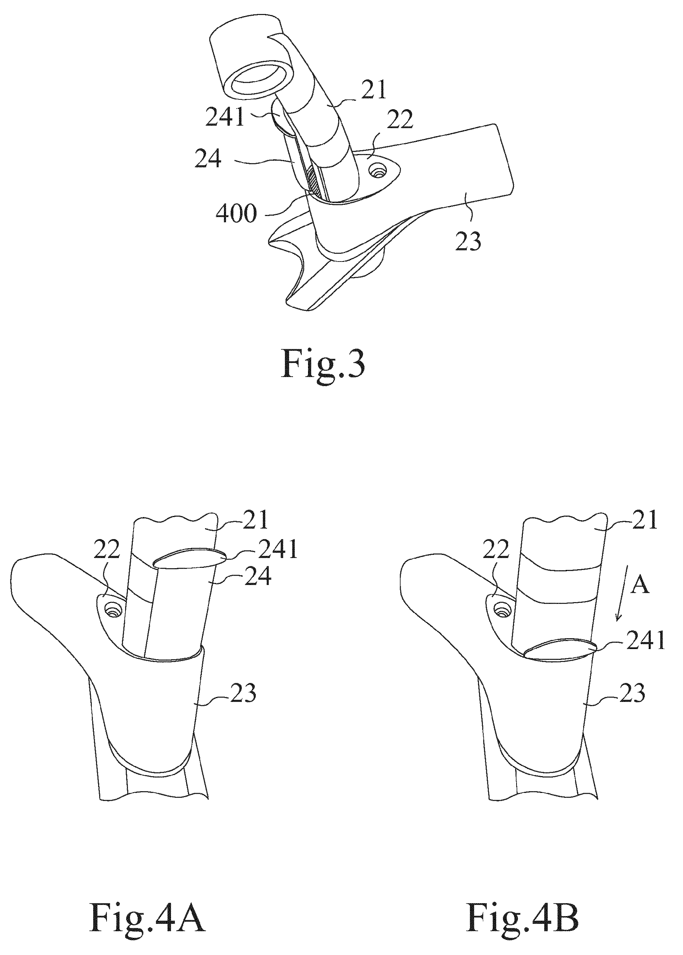

Refer to Fig.3 which is a diagram schematically showing installation of the shock-absorbing spacer and the seat tube according to a preferred embodiment of the present invention. As shown in Fig.3, the shock-absorbing pad 24 in the embodiment is a long and flat arcuate bodyand an upper surface of the shock-absorbing pad 24 has a flange 241. In addition, after installing the seat tube 22 and the seat post 21, an installation slot 400 is formed between an outer wall of the seat post 21 and a front side surface of an inner wall of the seat tube 22. The installation slot 400 is configured to accommodate the shock-absorbing pad 24. When it is desired to assemble the bicycle seat tube assembly 105, a user applies force on the shock-absorbing pad 24 so that the shock-absorbing pad 24 is inserted into the installation tank 400 until the flange 241 abuts against an upper rim of the installation slot 400. Thus, the shock-absorbing pad 24 is attached to the seat post 21 whereby the shock-absorbing pad 24 is assembled with the bicycle seat tube assembly 105. When the user wants to replace the shock-absorbing pad 24, the shock-absorbing pad 24 is extracted from the installation slot 400 by the flange 241, thereby easily completing installation and replacement of the shock-absorbing pad 24.

Refer to Fig.4A and Fig.4B. Fig.4A is a diagram schematically showing the shock-absorbing spacer being partially installed on the bicycle seat tube assembly according to a prefered embodiment of the present invention. Fig.4B is a diagram schematically showing the shock-absorbing spacer completely installed on the bicycle seat tube assembly according to a preferred embodiment of the present invention. As shown in Fig.4A and Fig.4B, the user applies force on the shock-absorbing pad 24 in a direction indicated by an arrow A so that the shock-absorbing pad 24 is inserted into the installation slot 400 until the flange 241 abuts against the upper rim of the installation slot 400. Thus, the shock-absorbing pad 24 is attached to the seat post 21 whereby the shock-absorbing pad 24 is assembled with the bicycle seat tube assembly 105. It is noteworthy that the shock-absorbing pad 24 in the embodiment is installed onto a rear surface of the seat post 21. In other embodiments, the shock-absorbing spacer 24 can be alternatively arranged onto a front surface of the seat post 21. However, the features disclosed in the embodiment are exemplified. The position that the shock-absorbing pad 24 of the present invention is installed on the bicycle seat tube assembly 105 is adaptable according to the design requirement.

The shock-absorbing pad 24 is made of elastic polymer, such as thermoplastic elastomer (TPE). Additionally, when the user inserts the shock-absorbing pad 24 into the installation slot 400, there is no gap between the seat post 21 and the shock-absorbing pad 24. In other words, the shock-absorbing pad 24 is seamlessly attached to the seat post 21. As a result, the shock-absorbing pad 24 can reduce shocks transmitted from rough roads to a rider through the seat post 21. Consequently, the user can replace the shock-absorbing pad 24 according to requirements. For example, if the user thinks that the suspension effect of the shock-absorbing pad 24 is too soft, it can be replaced with a stiffer shock-absorbing pad. If the user thinks that the suspension effect of the shock-absorbing pad 24 is too stiff, it can be replaced with a softer shock-absorbing pad.

Four examples are introduced as below. The examples manifest experiment data for showing the suspension effect of the bicycle seat tube assembly of the present invention in practice applications.

### Example 1:

Example 1 shows test results of a pressure test of a conventional bicycle seat tube assembly without any shock-absorbing structures. In the test, test conditions include the strength of a seat post being more than 120 kgf, the total energy being 380 kg*mm and Young's modulus being 2.427 kgf/mm². The test results of the pressure test are shown in Table 1 below.

**Table 1**

| | Weight (kgf) | Compression | Stress | Stress |
|---|---|---|---|---|
| | | (mm) | (kgf/mm²) | variation (%) |
| Maximum | 121.8 | 6.40 | 0.304 | 12.80 |
| Break | 121.8 | 6.40 | 0.304 | 12.80 |
| Yield strength (Ys) | 0.0 | 0.00 | 0.000 | 0.00 |

Wherein, Ys denotes yield strength. From the abovementioned experiment data, the percentage of plastic stress variation, namely, the elongation rate, reaches 12.80% when the bicycle seat tube assembly without any shock-absorbing structures of the conventional technology is under test.

### Example 2:

Example 2 shows test results of a pressure test of the bicycle seat tube assembly of the present invention. In the test, test conditions include the strength of a seat post being more than 120 kgf, the total energy being 411 kg*mm and Young's modulus being 1.650 kgf/mm². Besides, the shock-absorbing structure is made of low-level thermoplastic elastomer. The test results of the pressure test are shown in Table 2 below.

**Table 2**

| | Weight (kgf) | Compression | Stress | Stress |
|---|---|---|---|---|
| | | (mm) | (kgf/mm²) | variation (%) |
| Maximum | 120.9 | 7.29 | 0.302 | 14.58 |
| Break | 120.9 | 7.29 | 0.302 | 14.58 |
| Yield strength (Ys) | 0.0 | 0.00 | 0.000 | 0.00 |

Wherein, Ys denotes yield strength. From the abovementioned experiment data, the shock-absorbing structure is made of low-level thermoplastic elastomer, and the percentage of plastic stress variation, namely, the elongation rate, reaches 14.58% when the bicycle seat tube assembly of the present invention is under test. Apparently, the percentage of plastic stress variation of Example 2, namely, the elongation rate, is better than the data of Example 1. In other words, the suspension effect of the bicycle seat tube assembly of the present invention is better than that of the conventional bicycle seat tube assembly without any shock-absorbing structures.

### Example 3:

Example 3 shows test results of a pressure test of the bicycle seat tube assembly of the present invention. In the test, test conditions includes the strength of a seat post being more than 120 kgf, the total energy being 508 kg*mm and Young's modulus being 1.586 kgf/mm². Besides, the shock-absorbing structure is made of medium-level thermoplastic elastomer. The test results of the pressure test are shown in Table 3 below.

**Table 3**

| | Weight (kgf) | Compression | Stress | Stress |
|---|---|---|---|---|
| | | (mm) | (kgf/mm²) | variation (%) |
| Maximum | 120.8 | 8.91 | 0.302 | 17.82 |
| Break | 120.8 | 8.91 | 0.302 | 17.82 |
| Yield strength (Ys) | 0.0 | 0.00 | 0.000 | 0.00 |

Wherein, Ys denotes yield strength. From the abovementioned experiment data, the shock-absorbing structure is made of medium-level thermoplastic elastomer, and the percentage of plastic stress variation, namely, the elongation rate, reaches 17.82% when the bicycle seat tube assembly of the present invention is under test. Apparently, the percentage of plastic stress variation of Example 3, namely, the elongation rate, is better than the data of Example 1 and Example 2. In other words, the suspension effect of the bicycle seat tube assembly of the present invention is better than that of the conventional bicycle seat tube assembly without any shock-absorbing structures.

### Example 4:

Example 4 shows test results of a pressure test of the bicycle seat tube assembly of the present invention. In the test, test conditions includes the strength of a seat post being more than 120 kgf, the total energy being 601 kg*mm and Young's modulus being 1.407 kgf/mm². Besides, the shock-absorbing structure is made of high-level thermoplastic elastomer. The test results of the pressure test are shown in Table 4 below.

**Table 4**

| | Weight (kgf) | Compression | Stress | Stress |
|---|---|---|---|---|
| | | (mm) | (kgf/mm²) | variation (%) |
| Maximum | 121.1 | 10.67 | 0.303 | 21.34 |
| Break | 121.1 | 10.67 | 0.303 | 21.34 |
| Yield strength (Ys) | 0.0 | 0.00 | 0.000 | 0.00 |

Wherein, Ys denotes yield strength. From the abovementioned experiment data, the shock-absorbing structure is made of high-level thermoplastic elastomer, and the percentage of plastic stress variation, namely, the elongation rate, reaches 21.34% when the bicycle seat tube assembly of the present invention is under test. Apparently, the percentage of plastic stress variation of Example 4, namely, the elongation rate, is better than the data of Example 1, Example 2 and Example 3. In other words, the suspension effect of the bicycle seat tube assembly of the present invention is better than that of the conventional bicycle seat tube assembly without any shock-absorbing structures.

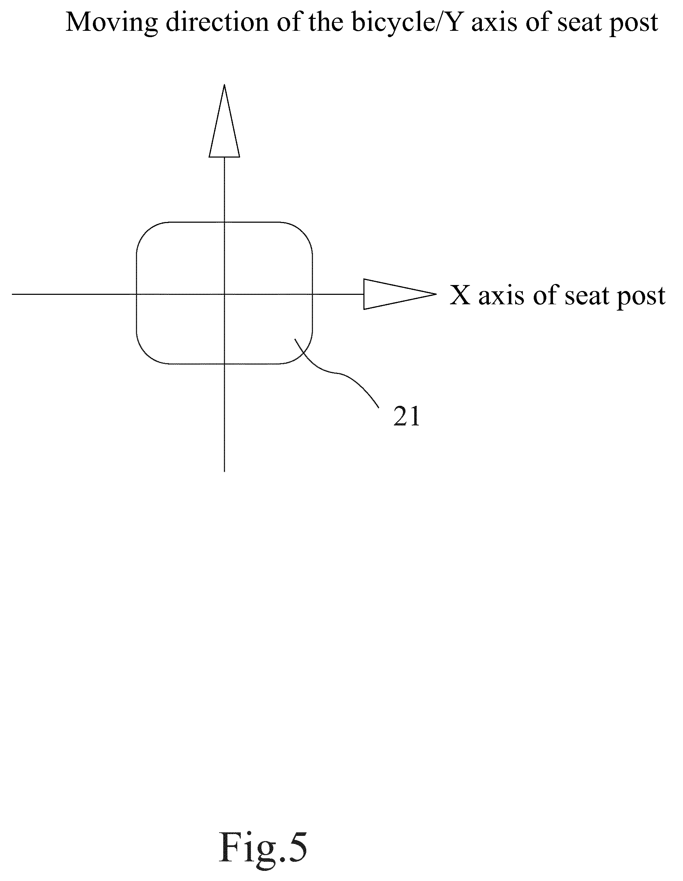

Refer to Fig.5. Fig.5 is a cross-sectional view of a seat post of a bicycle according to a preferred embodiment of the present invention. As shown in Fig.5, a length of the seat post 21 in an X axis direction is larger than a length of the seat post 21 in a Y axis direction, namely, the length that the bicycle moves forward. This design can indeed and effectively reduce shocks transmitted to a rider.

In conclusion, the present invention provide a bicycle seat tube assembly with shock-absorbing structure and a bicycle using the same, wherein the bicycle seat tube assembly comprises a shock-absorbing structure configured to be replaceably arranged in the bicycle seat tube assembly and attached to the seat post to reduce shocks transmitted to the bicycle. Thereby, a user can freely replace the shock-absorbing structure of the bicycle seat tube assembly to adjust the stiffness of the suspension system of the bicycle and obtain the comfortable riding effect.

The embodiments described above are only to exemplify the present invention but not to limit the scope of the present invention. Therefore, any equivalent modification or variation according to the shapes, structures, features, or spirit disclosed by the present invention is to be also included within the scope of the present invention.

## Claims

1. A bicycle seat tube assembly with a shock-absorbing structure comprising:
a seat post connected with a saddle of a bicycle;
a seat tube sleeving an outer wall of said seat post; and
a shock-absorbing structure configured to be replaceably arranged in said bicycle seat tube assembly and attached to said seat post to reduce shocks transmitted to said bicycle.

2. The bicycle seat tube assembly with a shock-absorbing structure according to claim 1, wherein said shock-absorbing structure comprises thermoplastic elastomer (TPE).

3. The bicycle seat tube assembly with a shock-absorbing structure according to claim 1, wherein said shock-absorbing structure further comprises at least one shock-absorbing pad.

4. The bicycle seat tube assembly with a shock-absorbing structure according to claim 3, wherein said shock-absorbing pad is a long and flat arcuate body, and an upper surface of said shock-absorbing pad has a flange.

5. The bicycle seat tube assembly with a shock-absorbing structure according to claim 1, further comprising a seat lug having an opening to accommodate said seat tube.

6. The bicycle seat tube assembly with a shock-absorbing structure according to claim 1, wherein said seat post has a shape of a cylinder, an elliptic cylinder, or a water drop.

7. The bicycle seat tube assembly with a shock-absorbing structure according to claim 1, wherein said shock-absorbing structure is seamlessly attached to said seat post.

8. The bicycle seat tube assembly with a shock-absorbing structure according to claim 1, further comprising an installation slot arranged between an outer wall of said seat post and a front side surface or a back side surface of an inner wall of said seat tube to accommodate said shock-absorbing structure.

9. The bicycle seat tube assembly with a shock-absorbing structure according to claim 1, wherein a length of said seat post in an X axis direction is larger than a length of said seat post in a Y axis direction.
